**Europäisches Patentamt**

**European Patent Office**

**Office européen des brevets**

(11) Veröffentlichungsnummer: **0 572 369 B1**

## (12) EUROPÄISCHE PATENTSCHRIFT

(45) Veröffentlichungstag der Patentschrift: **11.10.95**

(21) Anmeldenummer: **93890080.0**

(22) Anmeldetag: **19.04.93**

(51) Int. Cl.6: **B01D 29/66**, B01D 29/68, D01D 1/10, B01D 29/01, B01D 29/05, B01D 35/12, B29C 47/68

(54) **Rückspülbare Filtervorrichtung zur Filtration hochviskoser Flüssigkeiten.**

(30) Priorität: **27.05.92 AT 1102/92**

(43) Veröffentlichungstag der Anmeldung:
**01.12.93 Patentblatt 93/48**

(45) Bekanntmachung des Hinweises auf die
Patenterteilung:
**11.10.95 Patentblatt 95/41**

(84) Benannte Vertragsstaaten:
**AT BE CH DE DK ES FR GB GR IE IT LI LU MC NL PT SE**

(56) Entgegenhaltungen:
EP-A- 0 250 695          EP-A- 0 270 501
EP-A- 0 314 024          EP-A- 0 452 539
WO-A-92/16351          DE-A- 2 947 685
DE-A- 3 033 056          DE-C- 69 045
DE-C- 4 126 261          US-A- 5 047 148

(73) Patentinhaber: **Lenzing Aktiengesellschaft**

**A-4860 Lenzing (AT)**

(72) Erfinder: **Klein, Walter**
**Siedlerweg 9**
**A-4860 Lenzing (AT)**

(74) Vertreter: **Schwarz, Albin, Dr.**
**Albertgasse 10/8**
**Postfach 224**
**A-1081 Wien (AT)**

Rank Xerox (UK) Business Services
(3. 10/3.09/3.3.3)

**Beschreibung**

Die Erfindung betrifft eine rückspülfähige Filtervorrichtung zur Filtration einer hochviskosen Flüssigkeit mit einem Gehäuse, welches eine Eintrittsöffnung für die zu filtrierende Flüssigkeit, ein Filter und eine Austrittsöffnung für Filtrat aufweist.

In der Literatur sind eine Reihe von rückspülfähigen Filtervorrichtungen bekannt. In der US-A-3,574,509 wird ein steuerbares Filter zur Filtrierung einer Flüssigkeit beschrieben. Das Filterelement besteht aus zwei konzentrisch durchlochten Zylindern, welche ein zwischen ihnen befindliches, sehr feines Drahtnetz halten, wobei dieser Aufbau in einem Hohlkörper gestützt wird. Ein Rückspülarm rotiert um eine Achse in der Mitte des Filterelementes. Der Rückspülarm hat einen Schlitz, der durch Formteile definiert ist, welche abdichtend über die innere Peripherie des Filterelementes streichen. Der sich während der Filtration sammelnde Rückstand wird durch den Schlitz im Arm zurückgespült.

Aus der EP-A - 0 305 606 ist eine rückspülbare Filteranlage bekannt, wobei im Überstauraum eines Filterbeckens eine wellenförmige Anordnung so eingebaut ist, daß sie mit einer teilweise geöffneten Schlammwasserklappe ein direktes Ausströmen des aufgewirbelten körnigen Filtermaterials in dem Schlammwasserablauf - und damit den Verlust an Filtermaterial - verhindert.

Das Rückspülfilter gemäß der DE-A-37 05 803 weist eine Filterkammer auf, in die ein von dem zu filtrierenden Medium von innen nach außen durchströmter, zylindrischer Filtereinsatz eingesetzt ist. Dieser Filtereinsatz weist einen Innenkäfig auf, dessen zylindrische Wand im wesentlichen sich horizontal erstreckende, schlitzartige Fenster aufweist, die durch Stege voneinander getrennt sind, und in dessen Innerem ein die Filterrückstände abführender axialbeweglicher Schieber angeordnet ist.

Die EP-A - 0 411 163 beschreibt eine Filtervorrichtung mit kontinuierlicher Reinigung der Filterfläche. Die Vorrichtung enthält ein zylindrisches Gehäuse mit einer Eintrittsöffnung und einer Austrittsöffnung. Als Filterelement dient eine Hülse mit einer filtrierenden Seitenfläche und einem inneren Hohlraum. Ein Schaberelement ist mit einem Antrieb verbunden und in einem Ringraum montiert, der zwischen der Innenfläche des Gehäuses und der filtrierenden Außenfläche der Hülse gebildet ist. Das Schaberelement ist in Gestalt mindestens eines Spiralbandes ausgeführt, das die Hülse umfaßt und mit der Filterfläche derselben zusammenwirkt.

Auch aus der EP-A - 0 305 575 ist ein rückspülfähiger Filterapparat mit mechanischer Ausräumung des Filterkuchens bekannt.

Aus den EP-A-0 250 695, EP-A-0 314 024 und EP-A-0 452 539 sind verschiedene rückspülbare Filtervorrichtungen zur Filtration von Kunststoffschmelzen bekannt, welche jeweil einen vom Zulaufkanal getrennten Rückspülkanal aufweisen. Zur Rückspülung muß jeweils ein das eigentliche Filter tragender Teil verschoben werden, wodurch der Zulaufkanal gesperrt und der Ablaufkanal über den Filter mit der Filtratseite in Verbindung gebracht wird.

Die Erfindung stellt sich die Aufgabe, eine Filtervorrichtung zur Verfügung zu stellen, welche ohne mechanische Rückspülhilfen voll rückspülfähig ist, d.h., daß ohne bewegliche Teile, wie Schaber oder Rückspülarme, der Filterrückstand praktisch vollständig vom Filter abgehoben werden kann. Die genannten mechanischen Rückspülhilfen unterliegen einem Verschleiß, wodurch ein Auswechseln der betreffenden Teile notwendig wird. Dazu kommt noch, daß mechanische, bewegliche Teile reparaturanfällig sind. Beides führt dazu, daß Filtervorrichtungen zerlegt, oder daß zumindest in ihrem Inneren hantiert werden muß. Diese Arbeitsvorgänge sind insbesondere dann aufwendig, wenn eine hochviskose Flüssigkeit filtriert wird. Ist dieses Medium noch dazu gesundheitsschädlich, sind spezielle Sicherheitsvorkehrungen notwendig, wodurch die Reparatur noch aufwendiger wird.

Die erfindungsgemäße rückspülfähige Filtervorrichtung zur Filtration einer hochviskosen Flüssigkeit besitzt ein Gehäuse, welches eine Eintrittsöffnung für die zu filtrierende Flüssigkeit, ein Filter und eine Austrittsöffnung für Filtrat aufweist und ist dadurch gekennzeichnet, daß

- das Filter mit seiner der zu filtrierenden Flüssigkeit zugewandten Seite an einem Trennkörper mit filterseitigen Ausnehmungen ("Rejecträumen") anliegt,
- der Trennkörper Zulaufkanäle für die zu filtrierende Flüssigkeit aufweist, wobei die Zulaufkanäle in die Ausnehmungen münden,
- der Trennkörper eine von den Zulaufkanälen räumlich getrennte Ablaufeinrichtung für die durch die Ausnehmungen ("Rejecträume") rückgespülte Flüssigkeit aufweist,
- das Gehäuse eine mit der Ablaufeinrichtung verbundene Ableitung für die rückgespülte Flüssigkeit besitzt und daß
- die Eintrittsöffnung und die Ableitung verschließbar ausgeführt sind.

Der Trennkörper dient dazu, die zu filtrierende Flüssigkeit von der rückgespülten Flüssigkeit weitgehend zu trennen. Beim Rückspülen gelangt der vom Filter abgehobene Rückstand ("Reject") zunächst in

EP 0 572 369 B1

die Ausnehmungen, die aufgrund ihrer Funktion nachstehend als "Rejecträume" bezeichnet werden und über die von den Zulaufkanälen räumlich getrennte Ablaufeinrichtung zu einer Ableitung, die am besten am Filtergehäuse angebracht ist. Als Ablaufeinrichtung können ebenfalls Kanäle vorgesehen sein, die von den Rejecträumen durch den Trennkörper zur Ableitung führen. Als Ablaufeinrichtung ist aber auch ein System von Rillen denkbar, die sich entlang der dem Filter zugewandten Oberfläche des Trennkörpers erstrecken und die rückgespülte Flüssigkeit somit seitlich nach außen abführen.

Es hat sich gezeigt, daß die erfindungsgemäße Filtervorrichtung voll rückspülfähig ist, d.h., daß durch Rückspülen von Filtrat die im Filter abgelagerten Rückstände praktisch vollständig wieder vom Filter abgehoben und ausgespült werden können, sofern die Rückspülflüssigkeit eine Viskosität von mindestens 0,4 Pa.s besitzt. Die erfindungsgemäße Filtervorrichtung funktioniert aufgrund des Trennkörpers ohne bewegliche Innenteile. Die Steuerung der Filtrations- und Rückspülvorgänge erfolgt lediglich mittels Pump- und Absperrvorrichtungen. Weiters ist kein Filterantrieb erforderlich.

Die erfindungsgemäße Filtervorrichtung eignet sich insbesondere zur Filtration von hochvikosen Zelluloselösungen, Polyacryllösungen, Polyesterlösungen und - da sie völlig geschlossen ist und als sogenannte "Inline-Filtervorrichtung" verwendet werden kann - zur Filtration von hochviskosen agressiven, abrasiven und gesundheitsschädlichen Lösungen. Die erfindungsgemäße Vorrichtung benötigt keine dynamische Dichtung nach außen.

Die erfindungsgemäße Filtervorrichtung erlaubt auch eine Innenspülung mit chemischen Lösungsmitteln.

Der erfindungsgemäße Effekt ist unabhängig vom verwendeten Filtermaterial, wodurch für die jeweils zu filtrierende Flüssigkeit das passende Filter verwendet werden kann. Eine Beschränkung auf gewisse Filtermaterialien ist somit nicht erforderlich. Gängige Filtermaterialien sind beispielsweise Metallfaservliese, gesinterte Gewebe, Kombinationen von Metallfaservliesen mit Geweben und Kunststoffmaschengewebe.

Auch die geometrische Form der Rejecträume ist für die Erzielung des Effektes weitgehend unerheblich. Es liegt jedoch auf der Hand, daß die Rejecträume in ihrer Form so gestaltet werden sollten, daß Orte mit geringer Strömungsgeschwindigkeit vermieden werden. An diesen Orten werden die vom Filter beim Rückspülvorgang abgehobenen Rückstände von der Rückspülflüssigkeit nur erschwert bzw. nur teilweise mitgenommen. Gut geeignet sind demgegenüber halbkugelige, kuppelartige oder rillenförmige Rejecträume, wobei die Zulaufkanäle vorteilhafterweise an der tiefsten Stelle der Rejecträume einmünden. Der Radius der Rejecträume muß naturgemäß dem Filtermaterial und den beim Rückspülen am Filter auftretenden Drücken angepaßt sein, um das Filter mechanisch zu stützen, sodaß es nicht durchreißt. Eine mechanische Stütze ist natürlich auch an der der Austrittsöffnung zugewandten Seite des Filters vorzusehen, um ein Durchreißen oder eine Deformation des Filters aufgrund der für die Filtration erforderlichen hohen Drucke zu vermeiden. Eine derartige Stütze bietet beispielsweise die weiter unten beschriebene Filtratplatte, welche durchgehende Kanäle zur Durchleitung des Filtrates aufweist.

Aus wirtschaftlichen Gründen sollten die Rejecträume klein ausgeführt sein, damit die Rückstände mit möglichst wenig Flüssigkeit ausgespült werden können. Die genau definierten Rejecträume erlauben darüberhinaus auch eine exakt einstellbare Rejectmenge ohne Mengenveränderung.

Eine bevorzugte Ausführungsform der erfindungsgemäßen Filtervorrichtung besteht darin, daß die Ablaufeinrichtung als kanalartiges System mit Ablaufkanälen und Sammelkanälen ausgebildet ist.

In dieser Ausführungsform ist eine effiziente Abführung der rückgespülten Flüssigkeit aus den Rejecträumen verwirklicht. Die Ablaufkanäle sind kurze Kanäle, die die Rejecträume mit den längeren Sammelkanälen verbinden. Die Ablaufkanäle besitzen zweckmäßigerweise einen kleineren Durchmesser als die Sammelkanäle. Der kleine Durchmesser verhindert zusammen mit der hohen Viskosität der Flüssigkeit, daß der nach einem Rückspülvorgang etwa noch in den Ablauf- bzw. Sammelkanälen befindliche, vom Filter abgehobene Rückstand, während der nachfolgenden Filtrierung wieder zurück in die Rejecträume und so erneut auf das Filter gelangt. Es ist weiters zweckmäßig, die Zulaufkanäle an ihrer Mündung in die Ausnehmungen verjüngt auszuführen.

Die Erfindung betrifft auch einen Trennkörper zur Verwendung in der bevorzugten Ausführungsform der erfindungsgemäßen Filtervorrichtung, welcher als Platte ("Trennplatte") ausgeführt ist und weiters dadurch gekennzeichnet ist, daß

- die Achsen der Zulaufkanäle und der Sammelkanäle im wesentlichen aufeinander normal stehen,
- die Ausnehmungen halbkugelig, kuppelförmig oder als Rillen ausgestaltet sind,
- die Einmündungen der Zulaufkanäle an der tiefsten Stelle der Ausnehmungen vorgesehen sind, und
- von jeder Ausnehmung mindestens zwei Ablaufkanäle zu Sammelkanälen führen.

Die Trennplatte erlaubt die Durchführung aller für die Beschickung und Rückspülung des Filtermaterials notwendigen Funktionen. Es hat sich gezeigt, daß der Druckverlust in der Trennplatte im Vergleich zum Druckverlust des Filtermaterials vernachlässigbar gering ist.

3

Eine bevorzugte Ausführungsform dieser Trennplatte besteht darin, daß die Zulaufkanäle an den Einmündungen verjüngt sind und daß die Ablaufkanäle einen geringeren Durchmesser als die Sammelkanäle aufweisen.

Werden die Rejecträume der erfindungsgemäßen Trennplatte rillenartig vorgesehen, so hat es sich als günstig erwiesen, die Rillen zwischen 1 und 5 mm breit auszuführen und parallel anzuordnen.

Die Trennplatte wird pro Quadratmeter am besten mit 15.000 bis 25.000 Zulaufkanälen und mit 30.000 bis 40.000 Ablaufkanälen ausgestattet.

Die Ausführung des Trennkörpers als Platte eröffnet die Möglichkeit, in einem Gehäuse mehrere Filter übereinander anzuordnen und somit die Filterfläche zu erhöhen.

Eine derartige Variante der erfindungsgemäßen Filtervorrichtung besteht nun darin, daß

- zwei Trennplatten mit je einem anliegenden Filter vorgesehen sind, wobei die Trennplatten mit den die Filter tragenden Seiten einander zugewandt sind,
- und daß zwischen den Trennplatten eine Filtratplatte zur Stützung der Filter und zur Abführung des Filtrates vorgesehen ist.

Als Filtratplatte eignet sich ganz allgemein jeder plattenförmige Körper, welcher eine ausreichende Biegefestigkeit besitzt, um die Filter während des Filtrationsvorganges zu stützen und welcher Kanäle zur Abführung des Filtrates besitzt. Da in der beschriebenen Ausführungsform Filtrat sowohl durch die Ober- als auch durch die Unterseite über Kanäle in die Filtratplatte dringt, sind zweckmäßigerweise im Inneren der Filtratplatte Längskanäle (z.B. in Form von Bohrungen) vorgesehen, welche parallel zur Ober- und Unterseite der Filtratplatte verlaufen und mit den von der Ober- und Unterseite einmündenden Kanälen verbunden sind, von diesen Filtrat aufnehmen und seitlich abführen. Die Dimensionierung der Filtratplatte, d.h. ihre Stärke, die Anzahl der Kanäle usw. kann dem jeweiligen Verwendungszweck angepaßt werden.

Um ein unerwünschtes Vermischen der einzelnen flüssigen Medien zu vermeiden, müssen natürlich der Zulauf von zu filtrierender Flüssigkeit, der Ablauf von Filtrat und der Ablauf von rückgespülter Flüssigkeit räumlich voneinander getrennt werden, was jedoch vom Fachmann auf einfache Weise vorgesehen werden kann.

Die Trennplatten können nach außen von Zulaufplatten abgedeckt sein, welche ebenfalls Kanäle aufweisen, durch die die zu filtrierende Flüssigkeit in die Zulaufkanäle der Trennplatten verteilt bzw. eingebracht wird.

Eine weitere vorteilhafte Ausgestaltung der erfindungsgemäßen Filtervorrichtung ist sandwichartig aus mehreren Filtereinheiten aufgebaut, wobei eine Filtereinheit aus einer Zulaufplatte und zwei Trennplatten mit je einem Filter, die durch eine Filtratplatte voneinander getrennt sind, besteht.

Es hat sich zur leichteren Reinigung einzelner Filtervorrichtungen als zweckmäßig erwiesen, nicht mit einer einzigen Vorrichtung zu filtrieren, sondern mit einem Filtersystem bestehend aus mehreren Filtervorrichtungen, welche parallel geschaltet sind.

Nachstehend wird die Erfindung an Hand der Zeichnung noch näher erläutert, welche in Figur 1 eine plattenartige Ausgestaltung des Trennkörpers 5 und in der Figur 2 eine einfache Ausgestaltung der Filtervorrichtung darstellt. In Figur 3 wird die Arbeitsweise eines Filtersystem gezeigt, welches aus zwei parallel geschalteten Filtervorrichtungen besteht.

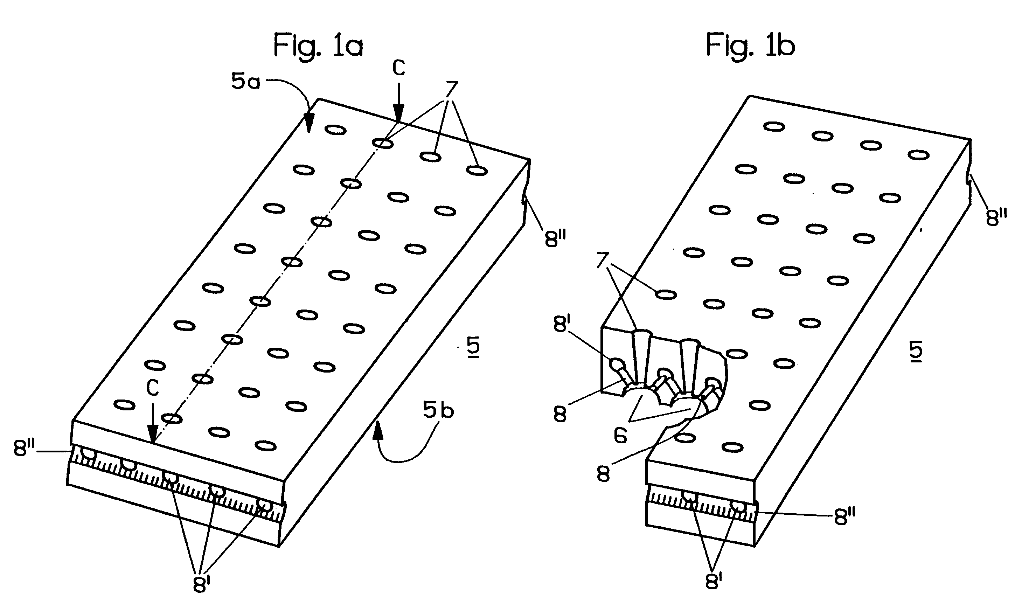

Fig. 1a ist eine perspektivische, schematische Darstellung des als Platte ausgeführten Trennkörpers 5. Bezugszeichen 7 steht für die Zulaufkanäle, durch welche die zu filtrierende Flüssigkeit zu den Ausnehmungen ("Rejecträumen") 6 und in der Folge durch das Filter (nicht dargestellt), gepreßt wird. Mit 5a ist jene Seite der Trennplatte 5 bezeichnet, welche der zu filtrierenden Flüssigkeit zugewandt ist. Die Rejecträume 6 befinden sich an der Unterseite 5b der Trennplatte 5. Die Sammelkanäle 8' verlaufen durch die gesamte Trennplatte 5 parallel zueinander und parallel zur Ober- und Unterseite 5a bzw. 5b. Die beiden Sammelkanäle 8'', welche die beim Rückspülen den Sammelkanälen 8' entströmende rückgespülte Flüssigkeit sammeln, müssen sich nicht notwendigerweise über die gesamte Breite der Trennplatte erstrecken. Die Unterseite 5b - und damit die Ausnehmungen 6 - werden vom Filter abgedeckt (nicht dargestellt). Die erfindungsgemäße Trennplatte 5 kann weitere Sammelkanäle (nicht dargestellt) in ihrem Inneren aufweisen, welche rückgespülte Flüssigkeit aus den Ablaufkanälen 8 in eine andere Richtung als in Fig. 1b gezeigt, nach außen abführen.

Fig. 1b zeigt zum besseren Verständnis des kanalartigen Systems im Inneren der Trennplatte nochmals die Trennplatte gemäß Fig. 1a, der jedoch ein Teil herausgeschnitten wurde. Zu sehen sind die Rejecträume 6, die kuppelförmig ausgeführt sind. Die Zulaufkanäle 7 sind an der Mündung in die Rejecträume 6 verjüngt ausgebildet. Der Durchmesser der Zulaufkanäle beträgt vorzugsweise zwischen 1 und 6 mm. Die Durchmesser der Ablaufkanäle 8 und der Sammelkanäle 8' betragen vorzugsweise zwischen 1 und 5 bzw. zwischen 4 und 10 mm. Die durch das Filter in die Rejecträume 6 rückgespülte Flüssigkeit fließt von den Rejecträumen 6 durch die Ablaufkanäle 8 in die Sammelkanäle 8' und 8''. Die dargestellte Trennplatte 5 besitzt zwei Sammelkanäle 8'', welche sich an zwei gegenüberliegenden Seiten der Trennplatte 5 befinden.

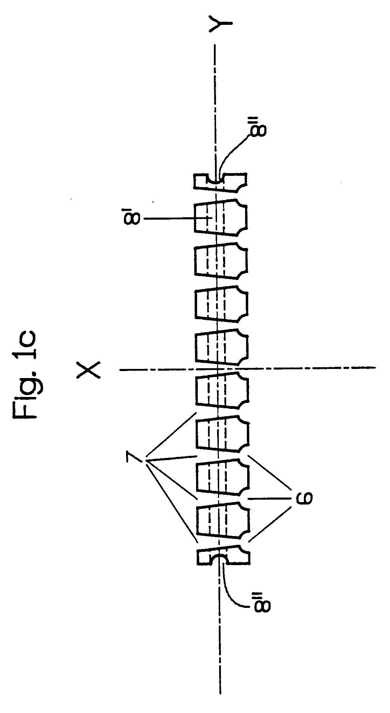

Fig. 1c zeigt einen Schnitt der Trennplatte 5 und zwar entlang der Linie c-c von Fig. 1a. In dieser Darstellung sind von der Ablaufeinrichtung für die rückgespülte Flüssigkeit lediglich die Sammelkanäle 8'' zu sehen. Die Sammelkanäle 8' wurden strichliert angedeutet; die Ablaufkanäle 8 sind nach dieser Darstellung nicht sichtbar. Die Achsen der Zulaufkanäle 7 und der Sammelkanäle 8' sind mit x und y angedeutet; in der gezeigten Ausführungsform der Trennplatte stehen die Achsen x und y aufeinander normal.

Die Größe der Trennplatte richtet sich nach der Höhe der Druckbelastung im Innenbereich des Filters. Im Falle einer rillenartigen Ausführung der Rejecträume ergibt sich bei einer Rillenbreite von 4 mm (bei einem Abstand benachbarter Rillen vom 1 mm) und bei einer Trennplattengröße von etwa 250 x 1000 mm (die für das Filter zur Verfügung stehende Fläche) eine freie Filterfläche von etwa 0,2 m². Die Trennplatte kann durch einen Steg oder durch Auflagepunkte in der Mitte der Platte zusätzlich gestützt werden.

Nachfolgend werden einige typische Daten für die in Fig. 1a dargestellte Ausführungsform der Trennplatte angegeben, welche sich insbesondere in einer Filtervorrichtung zur Filtration von hochviskosen, spinnfähigen Zellulose-Lösungen (z.B. NMMO-Lösungen) eignet:

```
Länge:                                    1.000 mm
Breite:                                     350 mm
Dicke:                                  10 - 20 mm
Material (beispielhaft):    Stahl, Kunststoff, Aluminium


Anzahl der Zulaufkanäle (7):                  4.100
   Durchmesser oben/unten:       2 - 5 mm/ 1 - 3 mm
Anzahl der Ablaufkanäle (8):          8.000 - 9.000
   Durchmesser:                           1 - 3 mm
Anzahl der Sammelkanäle (8'):            80 - 90
   Durchmesser:                           4 - 6 mm
Anzahl der Sammelkanäle (8''):                    2
   Durchmesser:                          6 - 10 mm
Durchmesser der kuppelförmigen Rejecträume:   2 - 4 mm
```

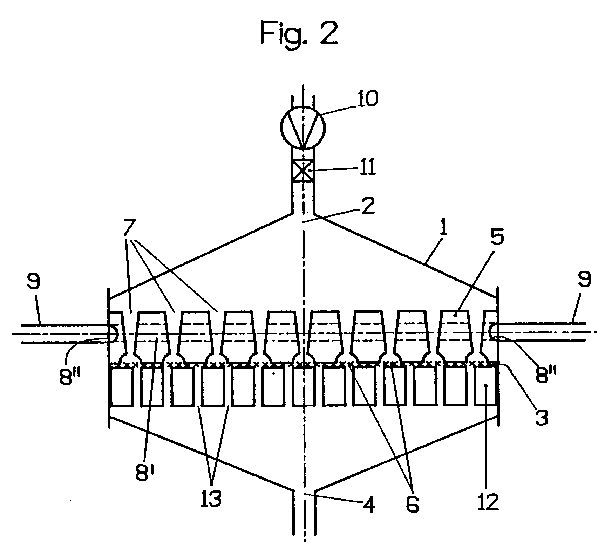

Fig. 2 zeigt einen Schnitt durch eine erfindungsgemäße Filtervorrichtung in einfacher Ausgestaltung, wobei als Trennplatte 5 jene in Fig. 1 beschriebene vorgesehen ist. Mit 1 ist das Gehäuse der Vorrichtung bezeichnet, 2 und 4 stehen für die Eintritts- bzw. Austrittsöffnung. Das Filter 3 liegt an der Trennplatte 5 an und zwar an jener Seite, welche die Rejecträume 6 aufweist.

Die Funktion der in Fig. 2 dargestellten Filtervorrichtung ist folgende:
Die zu filtrierende hochviskose Flüssigkeit wird mittels einer Druckerhöhungspumpe 10 bei geöffnetem Ventil 11 und bei verschlossener Ableitung 9 (Verschluß nicht dargestellt) durch die Eintrittsöffnung 2 unter Druck auf die Trennplatte 5 gefördert. Die Trennplatte 5 ist in Figur 2 im Schnitt entlang der Linie c-c von Fig. la gezeigt. Die Flüssigkeit dringt durch die Zulaufkanäle 7 in die Rejecträume 6 ein und wird unter Ablagerung der abzufiltrierenden Stoffe (Rückstand) durch das Filter 3 gepreßt. Das Filtrat gelangt durch eine Filtratplatte 12, welche Filtratkanäle 13 besitzt und das Filter 3 stützt, zur Austrittsöffnung 4 und kann dort gewonnen werden.

Zur Rückspülung wird zunächst das Ventil 11 geschlossen, die Ableitung 9 geöffnet und Filtrat unter Druck (Druckerzeugung nicht dargestellt) durch die Austrittsöffnung 4 und die Filtratplatte 12 durch das Filter 3 gepreßt, wobei der abfiltrierte Rückstand abgehoben wird. Der sich in den Rejecträumen 6 sammelnde Rückstand wird in der Folge durch die (in Fig. 2 nicht sichtbaren, in Fig. 1b dargestellten) Ablaufkanäle 8 in die Sammelkanäle 8' und 8'' ausgespült und kann über die Ableitung 9 der Filtervorrichtung entnommen werden.

In Figur 2 wurden nur die für das Verständnis der Erfindung notwendigen Konstruktionsmerkmale der Filtervorrichtung gezeigt. Es versteht sich von selbst, daß z.B. im Gehäuse geeignete Halterungen für die einzelnen Platten vorgesehen und daß die Platten gegeneinander abgedichtet sein müssen, um eine unerwünschte Vermischung der einzelnen Flüssigkeiten zu vermeiden.

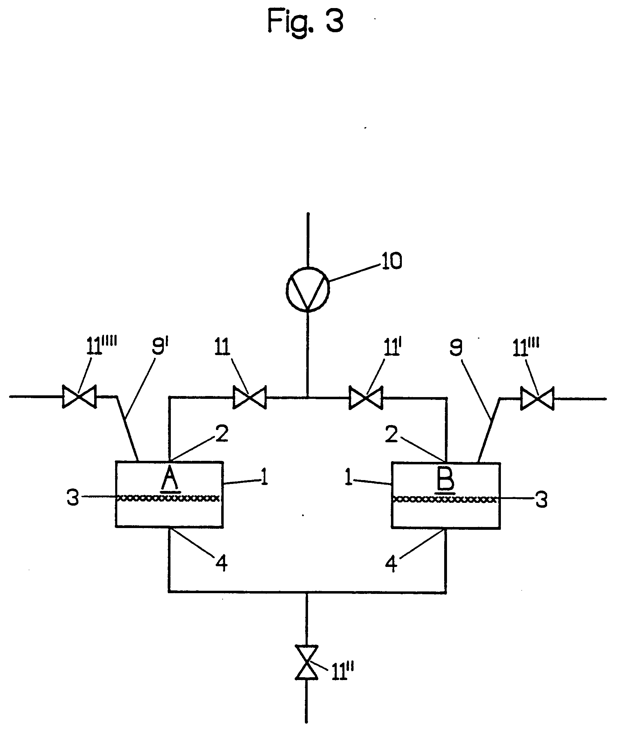

Fig. 3 zeigt eine Variante des erfindungsgemäßen Filtersystems bestehend aus zwei parallel geschalteten erfindungsgemäßen Filtervorrichtungen A und B mit gleich großen Filtern 3. Die Filtervorrichtungen sind nur schematisch dargestellt, da ihre Funktionsweise bereits an Hand der Figuren 1 und 2 erläutert wurde. Die Bezugzeichen A und B stehen für jede der beschriebenen Ausführungsformen.

Beide Filtereinheiten werden zunächst bei geöffneten Ventilen 11 und 11' mit zu filtrierender Flüssigkeit mittels der Druckerhöhungspumpe 10 beschickt. Zur Filtration ist das Ventil 11'' geöffnet, die Ableitungsventile 11''' und 11'''' sind geschlossen. Während der Filtration wird zwischen Eintritts-und Austrittsöffnung 2 bzw. 4 eine Druckdifferenz aufgebaut.

Zum Rückspülen der Filtervorrichtung B werden die Ventile 11' und 11'' geschlossen und das Ableitungsventil 11''' geöffnet. In der Folge strömt Filtrat von Filtervorrichtung A in umgekehrter Richtung durch Filtervorrichtung B und spült dadurch das in B befindliche Filter 3 frei. Das mit Rückstand beladene Filtrat wird durch die geöffnete Ableitung 9 aus der Filtervorrichtung B gepreßt.

Zum Rückspülen der Filtervorrichtung A werden die Ventile 11 und 11'' geschlossen und das Ableitungsventil 11'''' geöffnet. In der Folge strömt Filtrat von Filtervorrichtung B in umgekehrter Richtung durch Filtervorrichtung A und spült dadurch das in A befindliche Filter 3 frei. Das mit Rückstand beladene Filtrat wird durch die geöffnete Ableitung 9' aus der Filtervorrichtung A gepreßt.

Die zum Rückspülen erforderliche Filtrat-Förderleistung kann über die Druckerhöhungspumpe 10 bequem eingestellt und damit den jeweiligen Verhältnissen exakt angepaßt werden. Durch Erhöhen der Drehzahl der Pumpe 10 kann eine höhere Rückspülleistung eingestellt werden, wodurch eine bessere Reinigung des Filters erzielt wird.

Erfindungsgemäß können auch mehr Filtervorrichtungen zu einem Filtersystem parallel zusammengeschaltet werden, wodurch noch höhere Rückspülleistungen erreicht werden können.


**Patentansprüche**

1. Rückspülfähige Filtervorrichtung zur Filtration einer hochviskosen Flüssigkeit mit einem Gehäuse (1), welches eine Eintrittsöffnung (2) für die zu filtrierende Flüssigkeit, ein Filter (3) und eine Austrittsöffnung (4) für Filtrat aufweist, dadurch gekennzeichnet, daß

   - das Filter (3) mit seiner der zu filtrierenden Flüssigkeit zugewandten Seite an einem Trennkörper (5) mit filterseitigen Ausnehmungen ("Rejecträumen") (6) anliegt,
   - der Trennkörper (5) Zulaufkanäle (7) für die zu filtrierende Flüssigkeit aufweist, wobei die Zulaufkanäle (7) in die Ausnehmungen (6) münden,
   - der Trennkörper (5) eine von den Zulaufkanälen (7) räumlich getrennte Ablaufeinrichtung (8, 8', 8'') für die durch die Ausnehmungen ("Rejecträume") (6) rückgespülte Flüssigkeit aufweist,
   - das Gehäuse (1) eine mit der Ablaufeinrichtung (8, 8', 8'') verbundene Ableitung (9) für die rückgespülte Flüssigkeit besitzt und daß
   - die Eintrittsöffnung (2) und die Ableitung (9) verschließbar ausgeführt sind.

2. Filtervorrichtung nach Anspruch 1, dadurch gekennzeichnet, daß die Ablaufeinrichtung (8, 8', 8'') als kanalartiges System mit Ablaufkanälen (8) und Sammelkanälen (8',8'') ausgebildet ist.

3. Trennkörper zur Verwendung in einer Filtervorrichtung gemäß Anspruche 2, dadurch gekennzeichnet, daß er als Platte ("Trennplatte") ausgeführt ist, wobei

   - die Achsen (x, y) der Zulaufkanäle (7) und der Sammelkanäle (8') im wesentlichen aufeinander normal stehen,
   - die Ausnehmungen (6) halbkugelig, kuppelförmig oder als Rillen ausgestaltet sind,
   - die Einmündungen der Zulaufkanäle (7) an der tiefsten Stelle der Ausnehmungen (6) vorgesehen sind, und
   - von jeder Ausnehmung (6) mindestens zwei Ablaufkanäle (8) zu Sammelkanälen (8') führen.

4. Trennplatte nach Anspruch 3, dadurch gekennzeichnet, daß die Zulaufkanäle (7) an den Einmündungen verjüngt ausgeführt sind und daß die Ablaufkanäle (8) einen geringeren Durchmesser als die Sammelkanäle (8') aufweisen.

5. Trennplatte nach einem der Ansprüche 3 oder 4 mit rillenartiger Ausführung der Ausnehmungen (6), dadurch gekennzeichnet, daß Rillen parallel angeordnet sind und zwischen 1 und 5 mm breit sind.

6. Trennplatte nach einem der Ansprüche 3 oder 4, dadurch gekennzeichnet, daß pro Quadratmeter zwischen 15.000 und 25.000 Zulaufkanäle (7) und zwischen 30.000 und 40.000 Ablaufkanäle (8) vorgesehen sind.

7. Filtervorrichtung nach einem der Ansprüche 1 oder 2, dadurch gekennzeichnet, daß als Trennkörper (5) eine Trennplatte (5) gemäß einem oder mehreren der Ansprüche 3 bis 6 vorgesehen ist.

8. Filtervorrichtung nach Anspruch 7, dadurch gekennzeichnet, daß
   - zwei Trennplatten (5) mit je einem anliegenden Filter (3) vorgesehen sind, wobei die Trennplatten (5) mit den die Filter (3) tragenden Seiten einander zugewandt sind,
   - und daß zwischen den Trennplatten (5) eine Filtratplatte zur Stützung der Filter (3) und zur Abführung des Filtrates vorgesehen ist.

9. Filtervorrichtung nach Anspruch 8, dadurch gekennzeichnet, daß die Trennplatten (5) von Zulaufplatten abgedeckt sind, welche Kanäle aufweisen, durch die die zu filtrierende Flüssigkeit in die Trennplatten (5) eingebracht wird.

10. Filtervorrichtung nach Anspruch 9, dadurch gekennzeichnet, daß sie sandwichartig aus mehreren Filtereinheiten aufgebaut ist, wobei eine Filtereinheit aus einer Zulaufplatte und zwei Trennplatten (5) mit je einem Filter (3), die durch eine Filtratplatte voneinander getrennt sind, besteht.

11. Filtersystem bestehend aus mehreren Filtervorrichtungen gemäß einem der Ansprüche 1, 2 oder 7 bis 10, wobei die Filtervorrichtungen parallel geschaltet sind.

**Claims**

1. Filter device capable of being back-flushed for the filtration of a high viscosity liquid, with a housing (1) which has an inlet port (2) for the liquid to be filtered, a filter (3) and a outlet port (4) for filtrate, characterised in that
   - the filter (3) contacts, on its side facing the liquid to be filtered, a separating body (5) with recesses ("reject spaces") (6) on the filter side,
   - the separating body (5) has inlet channels (7) for the liquid to be filtered, whereby the inlet channels (7) run into the recesses (6),
   - the separating body (5) has an outlet device (8, 8', 8'') for the liquid back-flushed through the recesses ("reject spaces") (6) which is spatially separated from the inlet channels (7),
   - the housing (1) has a drain (9) connected to the outlet device (8, 8', 8'') for the back-flushed liquid, and that
   - the inlet port (2) and drain (9) are designed to be closable.

2. Filter device in accordance with Claim 1, characterised in that, the outlet device (8, 8', 8'') is formed as a system of channels with outlet channels (8) and collection channels (8', 8'').

3. Separating body for use in a filter device according to Claim 2, characterised in that, it is designed as a plate ("separating plate"), wherein
   - the axes (x, y) of the inlet channels (7) and of the collection channels (8') are substantially at right angles to one another,
   - the recesses (6) are arranged hemi-spherical, dome-shaped or as grooves,
   - the junctions of the inlet channels (7) are provided at the deepest points of the recesses (6), and
   - from each recess (6) at least two outlet channels (8) lead to collection channels (8').

4. Separating plate in accordance with Claim 3, characterised in that, the inlet channels (7) are designed to taper at the junctions and the diameter of the outlet channels (8) is smaller than that of the collection channels (8').

5. Separating plate in accordance with one of the Claims 3 or 4 with a grooved design for the recesses (6), characterised in that, the grooves are arranged parallel and are between 1 and 5 mm in width.

6. Separating plate in accordance with one of the Claims 3 or 4, characterised in that, between 15,000 and 25,000 inlet channels (7) and between 30,000 and 40,000 outlet channels (8) per square metre are provided.

7. Filter device in accordance with one of the Claims 1 or 2, characterised in that, a separating plate (5) according to one or more of the Claims 3 to 6 is provided as a separating body (5).

8. Filter device in accordance with Claim 7, characterised in that,
   - two separating plates (5) each with an adjacent filter (3) are provided, whereby the sides of the separating plates (5) which carry the filters (3) are turned towards one another, and that
   - between the separating plates (5) a filtrate plate is provided to support the filter (3) and to lead the filtrate away.

9. Filter device in accordance with Claim 8, characterised in that, the separating plates (5) are covered by inlet plates which have channels through which the liquid to be filtered is introduced to the separating plates (5).

10. Filter device in accordance with Claim 9, characterised in that, it is constructed from several filter units in the form of a sandwich, whereby one filter unit consists of an inlet plate and two separating plates (5) each with a filter (3), which are separated from one another by a filtrate plate.

11. Filter system consisting of several filter devices according to one of the Claims 1, 2 or 7 to 10, whereby the filter devices are connected in parallel.

## Revendications

1. Dispositif de filtration à rinçage à contre-courant, pour la filtration d'un liquide très visqueux, comportant un boitier (1) qui présente une ouverture d'entrée (2) pour le liquide à filtrer, un filtre (3) et une ouverture de sortie (4) pour le liquide filtré, caractérisé en ce que
   - par son côté tourné vers le liquide à filtrer, le filtre (3) repose sur un corps de séparation (5) comportant des découpes (6) du côté du filtre ("espaces de réjection"),
   - le corps de séparation (5) présente des canaux d'amenée (7) pour le liquide à filtrer, tandis que les canaux d'amenée (7) débouchent dans des découpes (6),
   - le corps de séparation (5) présente un dispositif de décharge (8, 8', 8'') du liquide de rinçage envoyé à contre-courant à travers les découpes ("espaces de réjection") (6), et qui est séparé spatialement des canaux d'amenée (7),
   - le boîtier (1) possède un conduite de décharge (9) reliée au dispositif de décharge (8, 8', 8'') pour le liquide rincé à contre-courant, et en ce que
   - l'ouverture d'entrée (2) et la conduite de décharge (9) sont réalisées de manière à pouvoir être fermées.

2. Dispositif de filtration selon la revendication 1, caractérisé en ce que le dispositif de décharge (8, 8', 8'') est configuré comme système à canaux, comportant des canaux de décharge (8) et des canaux de collecte (8', 8'').

3. Corps de séparation à utiliser dans un dispositif de filtration selon la revendication 2, caractérisé en ce qu'il est réalisé sous la forme d'une plaque ("plaque de séparation"), tandis que:
   - les axes (X, Y) des canaux d'amenée (7) et des canaux de collecte (8') sont essentiellement perpendiculaires l'un à l'autre,
   - les découpes (6) sont configurées en forme de demisphères, de cuvettes ou de rainures,
   - les embouchures des canaux d'amenée (7) sont prévues à l'emplacement le plus profond des découpes (6), et
   - au moins deux canaux de décharge (8) conduisent de chaque découpe (6) vers les canaux de collecte (8').

4. Plaque de séparation selon la revendication 3, caractérisée en ce que les canaux d'amenée (7) sont réalisés de manière à se rétrécir aux embouchures, et en ce que les canaux de décharge (8) présentent un diamètre inférieur à celui des canaux de collecte (8').

5. Plaque de séparation selon l'une quelconque des revendications 3 ou 4, dans laquelle les découpes (6) sont réalisées sous la forme de rainures, caractérisée en ce que les rainures sont disposées parallèlement et sont d'une largeur située entre 1 et 5 mm.

6. Plaque de séparation selon l'une quelconque des revendications 3 ou 4, caractérisée en ce que par mètre carré, il est prévu entre 15.000 et 25.000 canaux d' amenée (7) et entre 30.000 et 40.000 canaux de décharge (8).

7. Dispositif de filtration selon l'une quelconque des revendications 1 ou 2, caractérisé en ce qu'une plaque de séparation (5) selon l'une ou plusieurs des revendications 3 à 6 est prévue comme corps de séparation (5).

8. Dispositif de filtration selon la revendication 7, caractérisé en ce que
   - il est prévu deux plaques de séparation (5) sur chacune desquelles est posé un filtre (5), tandis que les plaques de séparation (5) sont tournées l'une vers l'autre par les côtés portant le filtre (3),
   - et en ce qu'une plaque à filtrat est prévue entre les plaques de séparation (5), pour le soutien du filtre (3) et l'extraction du filtrat.

9. Dispositif de filtration selon la revendication 8, caractérisé en ce que les plaques de séparation (5) sont recouvertes par des plaques d'amenée, qui présentent des canaux par lesquels le liquide à filtrer pénètre dans les plaques de séparation (5).

10. Dispositif de filtration selon la revendication 9, caractérisé en ce qu'il est construit en forme de sandwich constitué de plusieurs unités de filtration, une unité de filtration étant constituée d'une plaque d'amenée et de deux plaques de séparation (5) comportant chacune un filtre (3) et qui sont séparées l'une de l'autre par une plaque à filtrat.

11. Système de filtration constitué de plusieurs dispositifs de filtration selon l'une quelconque des revendications 1, 2 ou 7 à 10, dans lequel les dispositifs de filtration sont branchés en parallèle.

Fig. 1b

Fig. 1a

## Fig. 1c

Fig. 2

# Fig. 3